# EUROPEAN PATENT APPLICATION

(11) **EP 4 841 396 A1**
(43) Date of publication of application: **18.11.2026**
(21) Application number: 24916961.6
(22) Date of filing: 26.11.2024
(51) Int. Cl.: G06F 3/01, G01C 21/16, G06T 7/70, G06T 17/00, G06T 19/00, G06V 20/20

(54) **TERMINAL, INFORMATION PROCESSING DEVICE, DISPLAY METHOD, AND INFORMATION PROCESSING METHOD**

(30) Priority: 11.01.2024 JP 2024002241
(71) Applicant: Panasonic Intellectual Property Management Co., Ltd., Kadoma-shi, Osaka 571-0057 (JP)
(72) Inventor: ICHIMURA, Daijiroh, kadoma-shi, Osaka 571-0057 (JP)
(74) Representative: Grünecker Patent- und Rechtsanwälte PartG mbB
(86) International application number: PCT/JP2024/041724
(87) International publication number: WO 2025/150276

(57) **Abstract**

A terminal (100) includes: a first sensor (101) that sequentially obtains first sensor information; a second sensor (102) that sequentially obtains second sensor information; and a circuit (103) connected to the first sensor and the second sensor. The circuit (103) transmits first sensor information obtained by the first sensor (101) at a first time to an information processing device, and obtains a first terminal location of the terminal at the first time and a three-dimensional model from the information processing device. The first terminal location is estimated by the information processing device based on the first sensor information obtained at the first time. The three-dimensional model is generated by the information processing device based on the first sensor information obtained at the first time. The circuit estimates a second terminal location at a second time based on the first terminal location and the second sensor information. The second time is the time at which estimation of the second terminal location is executed. The circuit displays the three-dimensional model obtained, based on the second terminal location.

## Description

### [Technical Field]

The present disclosure relates to a terminal, an information processing device, a display method, and an information processing method.

### [Background Art]

Patent Literature (PTL) 1 discloses estimating the locations and orientations of a plurality of imaging devices (i.e., cameras) through feature matching among a plurality of images captured by the imaging devices.

### [Citation List]

### [Patent Literature]

[PTL 1] International Patent Publication No. WO 2020/153264

### [Summary of Invention]

### [Technical Problems]

The present disclosure provides a terminal, and so on, which can display a three-dimensional model properly.

### [Solution to Problems]

An aspect of the present disclosure is directed to a terminal including: a first sensor that sequentially obtains first sensor information for generating a three-dimensional model and estimating a location and an orientation of the terminal; a second sensor that sequentially obtains second sensor information for estimating an amount of change in the location and the orientation of the terminal; and a circuit connected to the first sensor and the second sensor. The circuit: transmits the first sensor information obtained by the first sensor at a first time to an information processing device; obtains, from the information processing device, (i) a first terminal location of the terminal at the first time, estimated by the information processing device based on the first sensor information obtained at the first time, and (ii) a three-dimensional model generated by the information processing device based on the first sensor information obtained at the first time; estimates a second terminal location of the terminal at a second time based on the first terminal location and the second sensor information. The second time is a time at which estimation of the second terminal location is executed; and displays the three-dimensional model obtained, based on the second terminal location.

An information processing device according to an aspect of the present disclosure includes: a memory; and a circuit connected to the memory. The circuit: obtains, from a terminal, first sensor information obtained at a first time among items of first sensor information that are sequentially obtained by a first sensor included in the terminal and are for generating a three-dimensional model and estimating a location and an orientation of the terminal; estimates a first terminal location of the terminal at the first time based on the first sensor information obtained at the first time; generates the three-dimensional model based on the first sensor information obtained at the first time; and transmits, to the terminal, the first terminal location, the three-dimensional model, and time information for identifying the first time.

Note that these general and specific aspects of the present disclosure may be implemented using a system, an integrated circuit, a computer program, or a non-transitory computer-readable recording medium, such as a CD-ROM, or any combination of methods, systems, devices, integrated circuits, computer programs, or non-transitory recording media.

### [Advantageous Effects of Invention]

A terminal, and so on, according to the present disclosure can display a three-dimensional model properly.

### [Brief Description of Drawing]

[FIG. 1]

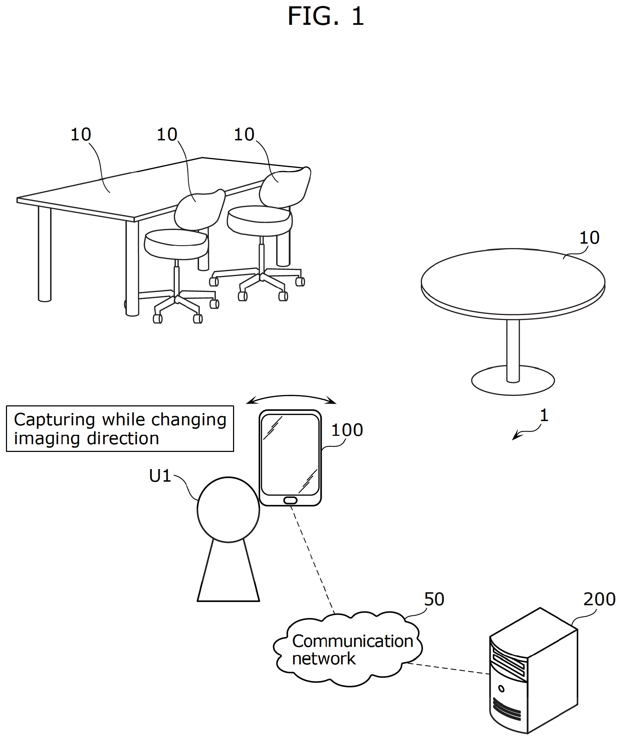

   FIG. 1 illustrates an example configuration of a system according to an embodiment.
[FIG. 2]

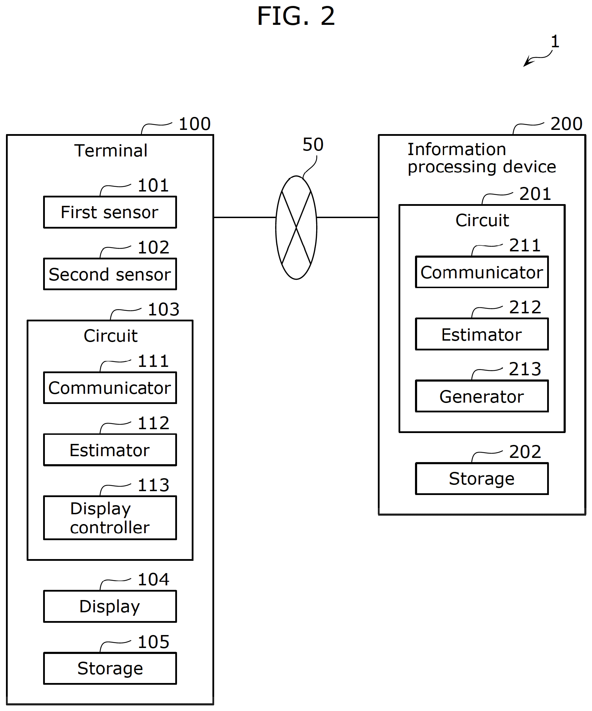

   FIG. 2 is a block diagram showing an example configuration of the system according to the embodiment.
[FIG. 3]

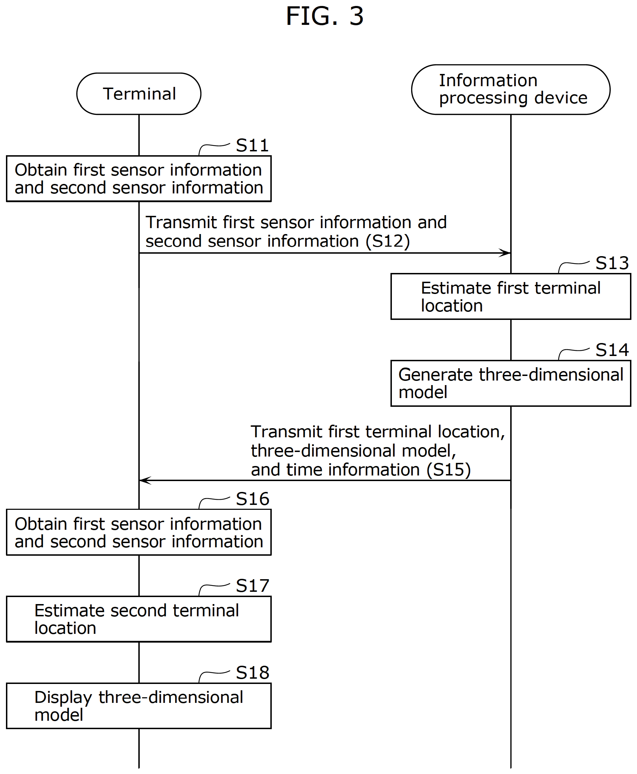

   FIG. 3 is a sequence diagram showing an example operation of the system.
[FIG. 4]

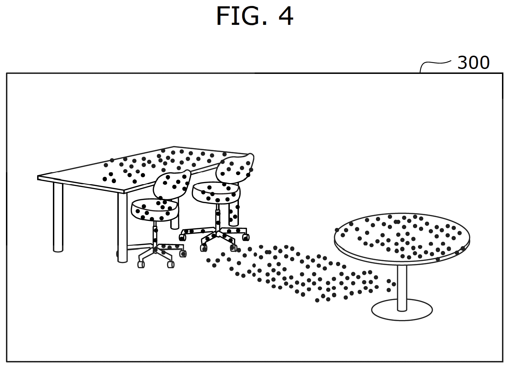

   FIG. 4 shows example display of a three-dimensional model.
[FIG. 5]

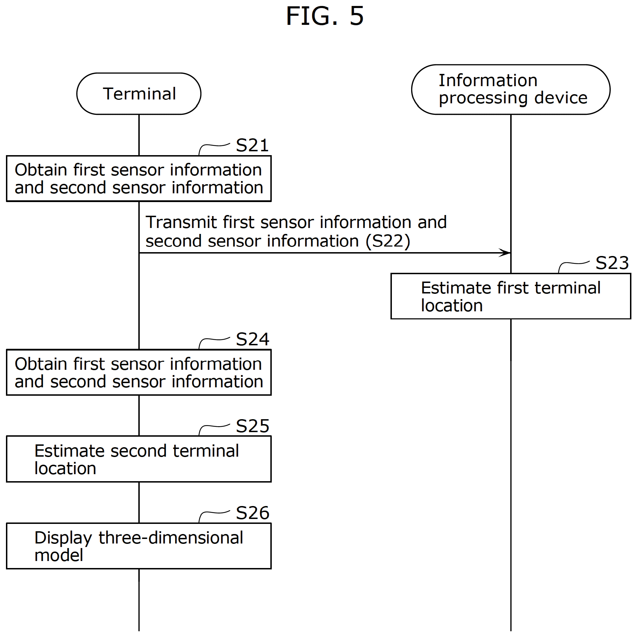

   FIG. 5 is a sequence diagram showing another example operation of the system.
[FIG. 6]

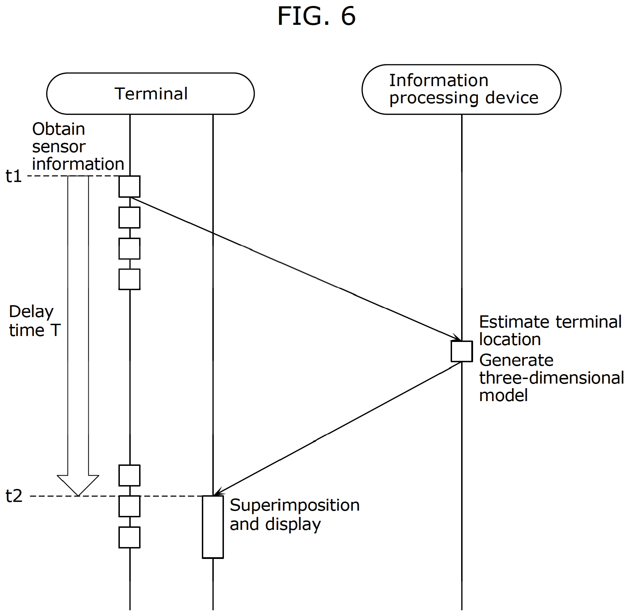

   FIG. 6 illustrates a delay in superimposing and displaying a three-dimensional model on an image.

### [Description of Embodiment]

### (Underlying Knowledge Forming Basis of the Present Disclosure)

The present inventors have found that the following problems occur in the typical system described in the "Background Art".

PTL 1 discloses causing an imaging device to perform capturing to generate a multi-view image including a plurality of images from different points of view, while moving the imaging device.

The present inventors found that there is a need for a device that allows a user to easily visually recognize a point of generating a three-dimensional model in a space to be captured by the following. Like the background art, the three-dimensional model is generated in real time based on a multi-view image obtained while moving a terminal, and superimposed on the image being captured.

However, the terminal often has insufficient processing capabilities. In order to reduce the processing load, it is thus conceivable to transfer the plurality of images to an information processing device with sufficient processing capabilities and causes the information processing device to generate a three-dimensional model requiring a high processing load. If a device that captures the images is different from a device that generates a three-dimensional model, communications are necessary between the devices. Assume that a terminal transmits captured images to the information processing device in real time, and the information processing device obtains and displays the generated three-dimensional model. In this case, there is a time lag from the time of capturing the images to the time of displaying the generated three-dimensional model. It is highly possible that the terminal moves in the time lag. If the terminal tries to display the three-dimensional model generated based on the images captured at a prior time on an image captured at the current time as it is, the point of view when capturing the image and the point of view when capturing the images as the basis of the three-dimensional model are different. It is thus highly possible that the three-dimensional model is displayed at a point different from the location of an object on the image.

To address the problems, the present inventors have thought of a terminal, and so on, which can display a three-dimensional model properly.

A first aspect of the present disclosure is directed to a terminal including: a first sensor that sequentially obtains first sensor information for generating a three-dimensional model and estimating a location and an orientation of the terminal; a second sensor that sequentially obtains second sensor information for estimating an amount of change in the location and the orientation of the terminal; and a circuit connected to the first sensor and the second sensor. The circuit: transmits the first sensor information obtained by the first sensor at a first time to an information processing device; obtains, from the information processing device, (i) a first terminal location of the terminal at the first time, estimated by the information processing device based on the first sensor information obtained at the first time, and (ii) a three-dimensional model generated by the information processing device based on the first sensor information obtained at the first time; estimates a second terminal location of the terminal at a second time based on the first terminal location and the second sensor information. The second time is a time at which estimation of the second terminal location is executed; and displays the three-dimensional model obtained, based on the second terminal location.

With this configuration, the terminal estimates the second terminal location and the second sensor information based on the first terminal location, and displays the three-dimensional model based on the estimated second terminal location. The first terminal location is the location of the terminal at the first time. The second terminal location is the location of the terminal at the second time. Accordingly, for example, a three-dimensional model can be displayed from the second terminal location as a point of view. The terminal can thus display the three-dimensional model according to the second terminal location at the second time, that is, can display the three-dimensional model properly.

A terminal according to a second aspect of the present disclosure is an embodiment of the first aspect. In the second aspect, the circuit estimates the first terminal location based on the second sensor information in addition to the first sensor information.

With this configuration, the terminal estimates the first terminal location further based on the second sensor information, that is, can estimate the first terminal location more accurately.

A terminal according to a third aspect of the present disclosure is an embodiment of the first or second aspect. In the third aspect, an accuracy of the first terminal location is higher than an accuracy of the second terminal location.

With this configuration, the terminal estimates the second terminal location with reference to the highly accurate first terminal location, and can reduce the processing load.

A terminal according to a fourth aspect of the present disclosure is an embodiment of any one of the first to third aspects. In the fourth aspect, when estimating the second terminal location, the circuit: estimates an amount of change in the location and the orientation of the terminal from the first time to the second time based on the second sensor information obtained from the first time to the second time; and estimates the second terminal location based on the first terminal location and the amount of change.

With this configuration, the terminal estimates the second terminal location at the second time based on the amount of change in the location and the orientation of the terminal from the first time to the second time with reference to the first terminal location. The terminal can thus reduce the processing load for estimating the second terminal location, which is the location of the terminal at the second time.

A terminal according to a fifth aspect of the present disclosure is an embodiment of any one of the first to fourth aspects. In the fifth aspect, the second sensor information includes an acceleration of the terminal and an angular velocity of the terminal.

A terminal according to a sixth aspect of the present disclosure is an embodiment of any one of the first to fifth aspects. In the sixth aspect, the circuit further: obtains, together with the first terminal location and the three-dimensional model, time information for specifying the first time; and estimates the second terminal location based on the time information.

With this configuration, the terminal can easily specify the first time associated with the first terminal location and the three-dimensional model, using the time information. Accordingly, the terminal can easily estimate, for example, the amount of change in the location and the orientation of the terminal from the first time to the second time based on second sensor information.

A terminal according to a seventh aspect of the present disclosure is an embodiment of any one of the first to sixth aspects. In the seventh aspect, the first sensor information includes a plurality of images captured at locations and orientations different from each other. The circuit: obtains an image included in the first sensor information obtained by the first sensor at the second time; and superimposes and displays the three-dimensional model on the image based on the second terminal location.

With this configuration, the terminal displays the three-dimensional model on the image captured at the second time from the second terminal location as the point of view. The terminal can superimpose and display the three-dimensional model from the same point of view as that of when capturing the image. Accordingly, the terminal can display the three-dimensional model according to the second terminal location at the second time, that is, can display the three-dimensional model properly.

A terminal according to an eighth aspect of the present disclosure is an embodiment of the seventh aspect. In the eighth aspect, the three-dimensional model superimposed on the image is displayed in a different manner from the image.

With this configuration, the terminal can display the image and the three-dimensional model distinguishably from each other. The user can thus easily check the status of generating the three-dimensional model, by viewing the image and the three-dimensional model displayed on the terminal.

An information processing device according to a ninth aspect of the present disclosure includes: a memory; and a circuit connected to the memory. The circuit: obtains, from a terminal, first sensor information obtained at a first time among items of first sensor information that are sequentially obtained by a first sensor included in the terminal and are for generating a three-dimensional model and estimating a location and an orientation of the terminal; estimates a first terminal location of the terminal at the first time based on the first sensor information obtained at the first time; generates the three-dimensional model based on the first sensor information obtained at the first time; and transmits, to the terminal, the first terminal location, the three-dimensional model, and time information for identifying the first time.

With this configuration, the information processing device transmits, to the terminal, time information for specifying the first time associated with the first terminal location and the three-dimensional model, together with the first terminal location and the three-dimensional model. The terminal can thus easily specify the first time associated with the first terminal location and the three-dimensional model. Accordingly, the terminal can easily estimate, for example, the amount of change in the location and the orientation of the terminal from the first time to the second time based on second sensor information. That is, the information processing device allows the terminal to display the three-dimensional model according to the second terminal location at the second time, that is, to display the three-dimensional model properly.

A display method according to a tenth aspect of the present disclosure is to be executed by a terminal. The display method includes: transmitting, to an information processing device, first sensor information obtained at a first time among items of first sensor information that are sequentially obtained by a first sensor included in the terminal and are for generating a three-dimensional model and estimating a location and an orientation of the terminal; obtaining, from the information processing device, (i) a first terminal location of the terminal at the first time estimated by the information processing device based on the first sensor information obtained at the first time, and (ii) a three-dimensional model generated by the information processing device based on the first sensor information obtained at the first time; estimating a second terminal location of the terminal at a second time based on the first terminal location and second sensor information that is sequentially obtained by a second sensor included in the terminal and is for estimating an amount of change in the location and the orientation of the terminal, the second time being the time at which estimation of the second terminal location is executed; and displaying the three-dimensional model obtained, based on the second terminal location.

With this method, the terminal estimates the second terminal location based on the first terminal location and the second sensor information, and displays the three-dimensional model based on the estimated second terminal location. The first terminal location is the location of the terminal at the first time. The second terminal location is the location of the terminal at the second time. Accordingly, for example, the terminal can display the three-dimensional model from the second terminal location as the point of view. The terminal can thus display the three-dimensional model according to the second terminal location at the second time, that is, can display the three-dimensional model properly.

An information processing method according to an eleventh aspect of the present disclosure is to be executed by an information processing device. The information processing method includes: obtaining, from a terminal, first sensor information obtained at a first time among items of first sensor information that are sequentially obtained by a first sensor included in the terminal and are for generating a three-dimensional model and estimating a location and an orientation of the terminal; estimating a first terminal location of the terminal at the first time based on the first sensor information obtained at the first time; generating the three-dimensional model based on the first sensor information obtained at the first time; and transmitting, to the terminal, the first terminal location, the three-dimensional model, and time information for identifying the first time.

With this method, the information processing device transmits, to the terminal, time information for specifying the first time associated with the first terminal location and the three-dimensional model, together with the first terminal location and the three-dimensional model. The terminal can easily specify the first time associated with the first terminal location and the three-dimensional model. Accordingly, the terminal can easily estimate, for example, the amount of change in the location and the orientation of the terminal from the first time to the second time based on the second sensor information. That is, the information processing device can cause the terminal to display the three-dimensional model according to the second terminal location at the second time, that is, to display the three-dimensional model properly.

Note that these general and specific aspects of the present disclosure may be implemented using a system, an integrated circuit, a computer program, or a non-transitory computer-readable recording medium, such as a CD-ROM, or any combination of methods, systems, devices, integrated circuits, computer programs, or non-transitory recording media.

Now, an embodiment will be described in detail with reference to the drawings. Unnecessarily detailed description may be omitted. For example, detailed description of already well-known matters or redundant description of substantially the same configurations may be omitted. This is not to make the following description unnecessarily redundant and for easier understanding by those skilled in the art.

The appended drawings and the following description are provided for sufficient understanding of the present disclosure by those skilled in the art, and not intended to limit the subject matters of the claims.

### (Embodiment)

Now, an embodiment will be described with reference to FIGS. 1 to 4.

### [Configuration]

FIG. 1 illustrates an example configuration of a system according to an embodiment.

System 1 includes terminal 100 and information processing device 200. In system 1, sensors included in terminal 100 sense object 10, and information processing device 200 generates a three-dimensional model of object 10, using a result of sensing. For example, terminal 100 performs sensing while being moved by user U1. While executing the sensing for generating the three-dimensional model of object 10, terminal 100 according to the present disclosure displays the status of the sensing. While obtaining the result of sensing from terminal 100, information processing device 200 generates the three-dimensional model based on the result of sensing, and transmits the three-dimensional model to terminal 100 so as to cause terminal 100 to display the status.

Terminal 100 and information processing device 200 are communicably connected to each other via communication network 50. Terminal 100 may be communicably connected to communication network 50 via a wireless local area network (LAN) or via a mobile phone communication network. Examples of terminal 100 include a smartphone, a tablet terminal, and a personal computer (PC). Information processing device 200 is communicably connected to communication network 50 via a wired LAN. Note that information processing device 200 may be communicably connected to communication network 50 via a wireless LAN.

FIG. 2 is a block diagram showing an example configuration of the system according to the embodiment.

A configuration of terminal 100 will be described.

Terminal 100 includes first sensor 101, second sensor 102, circuit 103, display 104, and storage 105.

First sensor 101 sequentially obtains first sensor information for generating a three-dimensional model and estimating the location and the orientation of terminal 100. Examples of first sensor 101 include a camera. For example, the camera may be a red-green-blue (RGB) camera or a black and white camera. The first sensor information is an image. For example, the image may be a color image with RGB sub-pixels, or a black and white image. The first sensor information includes a plurality of images captured by cameras, each of which is first sensor 101, at locations and orientations different from each other.

Second sensor 102 sequentially obtains second sensor information for estimating the amount of change in the location of terminal 100 and the amount of change in the orientation of terminal 100. Examples of second sensor 102 include an acceleration sensor that obtains the acceleration of terminal 100, and an angular velocity sensor that obtains the angular velocity of terminal 100. That is, the second sensor information includes the acceleration of terminal 100 and the angular velocity of terminal 100. Examples of the acceleration sensor include a three-axis acceleration sensor that obtains the accelerations of terminal 100 along three axes. The three axes are x-, y-, and z-axes that are orthogonal to each other. Examples of the angular velocity sensor include a three-axis angular velocity sensor that obtains the angular velocities of terminal 100 around the three axes. Second sensor 102 may further include a geomagnetism sensor.

Circuit 103 includes communicator 111, estimator 112, and display controller 113.

Communicator 111 exchanges information with information processing device 200 via communication network 50. Specifically, communicator 111 transmits the first sensor information sequentially obtained by first sensor 101 to information processing device 200. Communicator 111 may transmit the second sensor information sequentially obtained by second sensor 102 to information processing device 200. Communicator 111 receives (i.e., obtains) the first terminal location and the three-dimensional model from information processing device 200. The first terminal location includes the location and the orientation of terminal 100 at a first time, and is estimated by information processing device 200 based on the first sensor information obtained at the first time. Note that the first terminal location may be estimated based on the first sensor information and the second sensor information obtained at the first time. The three-dimensional model is generated by information processing device 200 based on the first sensor information obtained at the first time. Communicator 111 may receive (i.e., obtain) time information for specifying the first time, together with the first terminal location and the three-dimensional model. The time information only needs to be for specifying the first time, and may indicate the first time, may be for specifying the first sensor information associated with the first time, or may be for specifying the second sensor information associated with the first time.

Estimator 112 estimates the second terminal location, which is the location and the orientation of terminal 100 at a second time, based on the first terminal location and the second sensor information obtained via communicator 111. The second time is the time at which estimation of the second terminal location is executed. The second time is later than the first time. Estimator 112 specifies the first time associated with the first terminal location and the three-dimensional model obtained together with the time information, based on the obtained time information. Specifically, estimator 112 estimates the amount of change in the location and the orientation of terminal 100 from the first time to the second time based on the second sensor information obtained by second sensor 102 from the first time to the second time. Estimator 112 then estimates the second terminal location based on the first terminal location and the estimated amount of change. Specifically, by adding the amount of change in the location and the orientation of terminal 100 from the first time to the second time to the first terminal location, estimator 112 estimates the second terminal location. The first terminal location is the location of terminal 100 at the first time. The second terminal location is the location of terminal 100 at the second time.

Display controller 113 causes display 104 to display the three-dimensional model obtained via communicator 111, based on the second terminal location obtained via communicator 111. Display controller 113 obtains the image included in the first sensor information obtained by first sensor 101 at the second time, that is the image captured at the second time.

Display controller 113 superimposes the three-dimensional model on the image obtained at the second time, based on the second terminal location estimated by estimator 112, and causes display 104 to display the superimposed model. Display controller 113 superimposes, on the image, the three-dimensional model viewed when seeing in the direction of sensing terminal 100 by first sensor 101 at the second terminal location, and causes display 104 to display the superimposed model. Display controller 113 specifies the rotation matrices and the translation vectors in Equation 1 based on the second terminal location. Display controller 113 then specifies the two-dimensional points (i.e., the two-dimensional coordinates) on the image, on which the three-dimensional model is to be superimposed, using Equation 1 to which specified rotation matrices and translation vectors are applied. Display controller 113 then superimposes the three-dimensional model at the specified two-dimensional points.
[Math. 1] $s \left[\begin{matrix}u \\ v \\ 1\end{matrix}\right] = \left[\begin{matrix}{f}_{x} & 0 & {c}_{x} \\ 0 & {f}_{y} & {c}_{y} \\ 0 & 0 & 1\end{matrix}\right] \left[\begin{matrix}{r}_{11} & {r}_{12} & {r}_{13} & {t}_{1} \\ {r}_{21} & {r}_{22} & {r}_{23} & {t}_{2} \\ {r}_{31} & {r}_{32} & {r}_{33} & {t}_{3}\end{matrix}\right] \left[\begin{matrix}X \\ Y \\ Z \\ 1\end{matrix}\right]$ Equation 1

Here, u and v represent the two-dimensional points (i.e., the two-dimensional coordinates) of an object on an image. u represents the location of the object in the vertical direction, and v in the horizontal direction. fx and fy represent focal points of a camera as first sensor 101. fx and fy are constants. cx and cy represent the center of the camera as first sensor 101. cx and cy are constants. X, Y, and Z represent the three-dimensional points (i.e., the three-dimensional coordinates) of the three-dimensional model to be superimposed and displayed. For example, Equation 1 is applied to each of the three-dimensional points to specify the two-dimensional points of the object on the image corresponding to the three-dimensional points. r11 to r33 represent the rotation matrices (i.e., the orientations of the camera) out of the location of the camera as first sensor 101. t1 to t3 represent the translation vectors out of the location of the camera as first sensor 101. The first terminal location and the second terminal location are represented by the three-dimensional points using r11 to r33 and t1 to t3 in Equation 1. Note that three-dimensional points can also be expressed by other methods such as quaternions but the description thereof will be omitted.

Display controller 113 displays the three-dimensional model in a different manner from the image. That is, the three-dimensional model superimposed on the image is displayed in a different manner from the image.

Display 104 displays at least one of the image or the three-dimensional model based on a control instruction by display controller 113. Examples of display 104 includes a display.

Storage 105 stores at least one of the first sensor information sequentially obtained by first sensor 101 or the second sensor information sequentially obtained by second sensor 102. Storage 105 stores the first sensor information together with the time of obtaining the first sensor information. Storage 105 stores the second sensor information together with the time of obtaining the second sensor information. Storage 105 may store the first terminal location and the three-dimensional model obtained from information processing device 200. Examples of storage 105 include a storage and a memory.

Now, a configuration of information processing device 200 will be described.

Information processing device 200 includes circuit 201 and storage 202.

Circuit 201 includes communicator 211, estimator 212, and generator 213.

Communicator 211 exchanges information with terminal 100 via communication network 50. Specifically, communicator 211 receives (i.e., obtains) the first sensor information from terminal 100. For example, communicator 211 obtains, from terminal 100, the first sensor information obtained at the first time. Communicator 211 may further receive (i.e., obtain) the second sensor information from terminal 100. In addition, communicator 211 transmits, to terminal 100, the first terminal location, the three-dimensional model, and the time information. The first terminal location is the location of terminal 100 at the first time and is estimated by information processing device 200 based on the first sensor information obtained at the first time. The three-dimensional model is generated by information processing device 200 based on the first sensor information obtained at the first time. The time information is for specifying the first time.

Estimator 212 estimates the first terminal location of terminal 100 at the first time based on the first sensor information obtained at the first time. For simplicity, an estimation method using only the first sensor information will be described first. Estimator 212 specifies one or more features in a plurality of images included in the first sensor information. For example, estimator 212 then matches one or more features included in one of two of the images and one or more features included in the other, and specifies the pair(s) of the one or more features (hereinafter referred to as the "feature pair(s)"). The two images includes a first image obtained at the first time. Estimator 212 specifies the three-dimensional location (i.e., the three-dimensional points) associated with each of the one or more feature pairs of the two images. Estimator 212 estimates the first terminal location, which is the location of terminal 100 at the first time of obtaining the first image and the location of terminal 100 at the time of obtaining the other image, based on one or more three-dimensional points. For example, Structure from Motion (SfM) is used by estimator 212 to estimate the location. If no second sensor information is used to estimate the first terminal location, communicator 211 may be designed to receive no second sensor information from terminal 100.

In this manner, estimator 212 specifies the location of terminal 100 (i.e., the location of first sensor 101) at the time of capturing a plurality of images, using one or more three-dimensional points obtained in the feature matching using the images. The accuracy of the first terminal location estimated by estimator 212 is higher than the accuracy of the second terminal location estimated by estimator 112 of terminal 100. This is because the second terminal location is calculated only based on the acceleration and the angular velocity and errors are likely to accumulate.

Note that estimator 212 may estimate the first terminal location of terminal 100 at the first time based on the first sensor information and the second sensor information. For example, estimator 212 may specify, from the second sensor information, the difference between the first terminal location at the first time of capturing the first image and the other terminal location at the time of imaging the other image, based on the second sensor information in addition to the first sensor information. Estimator 212 may then utilize the difference to estimate the first terminal location and the other terminal location. In this manner, using the second sensor information including the information such as the acceleration and the angular velocity to estimate the first terminal location, for example, an initial value is given to specify the feature pair(s) using the first sensor information. A higher speed or a higher accuracy of the processing can be achieved.

Generator 213 generates the three-dimensional model of object 10 based on a plurality of images included in the first sensor information. Generator 213 may generate the three-dimensional model of object 10 based on the first terminal location estimated by estimator 212 in addition to a plurality of images included in the first sensor information. Generator 213 may generate the three-dimensional model by adding three-dimensional points obtained based on the images to the sparse three-dimensional points generated in the location estimation by estimator 212. Note that the three-dimensional model may include a plurality of three-dimensional points, a mesh based on a plurality of three-dimensional points, or a Neural Radiance Fields (NeRF) model.

Storage 202 stores the first sensor information obtained by communicator 211, the second sensor information obtained by communicator 211, the first terminal location estimated by estimator 212, and the three-dimensional model generated by generator 213. Examples of storage 202 include a storage or a memory.

### [Operation]

An operation of system 1 configured as above will be described.

FIG. 3 is a sequence diagram showing an example operation of the system.

Once the operation starts, terminal 100 obtains the first sensor information and the second sensor information (S11). Terminal 100 obtains the first sensor information and the second sensor information in a first period, for example. The first period is 0.1 seconds, for example. The first period is not necessarily 0.1 seconds but may be shorter than 0.1 seconds or 0.2 seconds or more. The period of obtaining the first sensor information and the period of obtaining the second sensor information are not necessarily the same but may be different from each other. For example, terminal 100 may obtain the first sensor information ten times per second, and the second sensor information 200 times per second. In this manner, terminal 100 may obtain the second sensor information in a shorter period than the first sensor information.

Terminal 100 transmits the first sensor information and the second sensor information via communication network 50 to information processing device 200 (S12).

When receiving the first sensor information and the second sensor information, information processing device 200 estimates the first terminal location based on the first sensor information and the second sensor information (S13). Information processing device 200 may estimate the first terminal location every time when receiving the first sensor information and the second sensor information. In this case, information processing device 200 estimates the first terminal location in the first period.

Information processing device 200 generates the three-dimensional model based on the first sensor information (S14). For example, information processing device 200 generates the three-dimensional model in the second period. The second period is longer than the first period. For example, the second period is one second. The second period is not necessarily one second but may be shorter than one second, or two, three, or more seconds. The second period may be the same as the first period.

Information processing device 200 transmits the estimated first terminal location, the generated three-dimensional model, and the time information via communication network 50 to terminal 100 (S15). The time information is for specifying the first time. At the first time, the first terminal location is estimated and the first sensor information and the second sensor information are obtained which are the basis of the three-dimensional model.

Terminal 100 obtains the first sensor information and the second sensor information (S16). The first sensor information is obtained at the second time (i.e., the current time). The second sensor information is obtained from the first time to the second time specified based on the time information. Terminal 100 may cause storage 105 to store the received first terminal location, three-dimensional model, and time information.

By adding the amount of change in the location and the orientation of terminal 100 from the first time to the second time to the first terminal location, terminal 100 estimates the second terminal location (S17). The first terminal location is the location of terminal 100 at the first time. The second terminal location is the location of terminal 100 at the second time.

Terminal 100 displays the obtained three-dimensional model based on the second terminal location (S18). Specifically, terminal 100 superimposes and displays the three-dimensional model on the first sensor information (i.e., the image) obtained in step S16, based on the second terminal location.

FIG. 4 shows example display of the three-dimensional model.

As shown in FIG. 4, terminal 100 displays a user interface (UI) 300 obtained by superimposing the three-dimensional model on the image captured at the second time (i.e., the current time) based on the second terminal location. Specifically, terminal 100 superimposes and displays, on an image, a three-dimensional model from the same point of view as that of when capturing the image on the object, which is the basis of the three-dimensional model on the image. In FIG. 4, the three-dimensional model includes a plurality of three-dimensional points and is thus indicated by dots. In this manner, the three-dimensional model is displayed in a different manner as the image so as to be distinguishable from the image.

Terminal 100 and information processing device 200 repeat the processes in steps S11 to S18 in the third period. The third period may be the same as or different from the second period. Information processing device 200 does not always repeat the estimation of the first terminal location and the generation of the three-dimensional model in the same period, but may execute only the estimation of the first terminal location. For example, since the first period for estimating the first terminal location is shorter than the second period of generating the three-dimensional mode, only the estimation of the first terminal location may be executed. In this case, terminal 100 and information processing device 200 execute the operation shown in FIG. 5. FIG. 5 is a sequence diagram showing another example operation of the system.

Terminal 100 obtains first sensor information and second sensor information (S21). Step S21 is the same as step S11.

Terminal 100 transmits the first sensor information and the second sensor information via communication network 50 to information processing device 200 (S22). Step S22 is the same as step S12.

When receiving the first sensor information and the second sensor information, information processing device 200 estimates the first terminal location based on the first sensor information and the second sensor information (S23). Step S23 is the same as step S13.

Terminal 100 obtains the first sensor information obtained at the third time (i.e., the current time) and the second sensor information obtained from the first time to the third time (S24). Here, the first time is specified based on the time information obtained in step S15 when the process shown in FIG. 3 has been performed last time. At step S24, terminal 100 may specify the first time by reading the latest time information out of the time information stored in storage 105. For example, the third time is later than the second time.

By adding the amount of change in the location and the orientation of terminal 100 from the first time to the third time to the first terminal location, terminal 100 estimates the second terminal location (S25). The first terminal location is the location of terminal 100 at the first time. The second terminal location is the location of terminal 100 at the third time.

Terminal 100 displays the three-dimensional model obtained at step S15 when the process shown in FIG. 3 has been performed last time, based on the second terminal location (S26). Specifically, terminal 100 superimposes and displays the three-dimensional model on the first sensor information (i.e., the image) obtained at step S24, based on the second terminal location.

After step S23, information processing device 200 may transmit the estimated first terminal location and the time information indicating the first time to terminal 100. In this case, at step S24, terminal 100 obtains the second sensor information obtained from the first time to the third time based on the first sensor information obtained at the third time (i.e., the current time) and the time information obtained at this time.

### [Problems and Advantages]

Problems of not employing the present invention will be described. As shown in FIG. 5, terminal 100 obtains the first sensor information and the second sensor information at first time t1, and then scans object 10, while being moved by the user, until second time t2 of displaying, based on the second terminal location, the three-dimensional model generated based on the first sensor information. Accordingly, the location and the orientation of terminal 100 change. Note that delay time T from first time t1 to second time t2 is the sum of the following communication and processing times. At one of the communication times, terminal 100 transmits the first sensor information and the second sensor information to information processing device 200. One of the processing times is required for information processing device 200 to estimate the first terminal location. The other processing time is required for information processing device 200 to generate a three-dimensional model. At the other communication time, information processing device 200 transmits the first terminal location and the three-dimensional model to terminal 100. In this manner, the location and the orientation of terminal 100 change in delay time T and are highly possibly different from the first terminal location at the first time. Assume that terminal 100 tries to display the three-dimensional model at the first time as it is on the image captured at the second time. The point of view as of when capturing the image and the point of view as of when capturing the images as the basis of the three-dimensional model are different. It is thus highly possible that the three-dimensional model is displayed at a point displaced from the object on the image.

The advantages of employing the present invention will be described. Terminal 100 according to this embodiment includes first sensor 101, second sensor 102, and circuit 103. First sensor 101 sequentially obtains first sensor information for generating a three-dimensional model and estimating the location and the orientation of terminal 100. Second sensor 102 sequentially obtains second sensor information for estimating the amount of change in the location and the orientation of terminal 100. Circuit 103 is connected to first sensor 101 and second sensor 102. Circuit 103 transmits the first sensor information obtained by first sensor 101 at a first time to information processing device 200. Circuit 103 obtains a first terminal location and the three-dimensional model from information processing device 200. The first terminal location of terminal 100 at the first time is estimated by information processing device 200 based on the first sensor information obtained at the first time. The three-dimensional model is generated by information processing device 200 based on the first sensor information obtained at the first time. Circuit 103 estimates the second terminal location at the second time based on the first terminal location and second sensor information. Here, the second time is the time at which estimation of the second terminal location is executed. Circuit 103 displays the obtained three-dimensional model based on the second terminal location.

With this configuration, based on the first terminal location and the second sensor information, terminal 100 estimates the second terminal location. The first terminal location is the location of terminal 100 at the first time. The second terminal location is the location of terminal 100 at the second time. Terminal 100 then displays the three-dimensional model based on the estimated second terminal location, that is, can display the three-dimensional model from the second terminal location as the point of view. Accordingly, terminal 100 can thus display the three-dimensional model according to the second terminal location at the second time, that is, can display the three-dimensional model properly.

In terminal 100 according to this embodiment, circuit 103 estimates the first terminal location based on the second sensor information in addition to the first sensor information.

With this configuration, terminal 100 estimates the first terminal location further based on the second sensor information, that is, can estimate the first terminal location more accurately.

In terminal 100 according to this embodiment, the accuracy of the first terminal location is higher than the accuracy of the second terminal location.

With this configuration, terminal 100 estimates the second terminal location with reference to the highly accurate first terminal location, and can thus reduce the processing load.

In terminal 100 according to this embodiment, circuit 103 estimates the second terminal location as follows. Circuit 103 estimates the amount of change in the location and the orientation of terminal 100 from the first time to the second time based on the second sensor information from the first time to the second time. Circuit 103 estimates the second terminal location based on the first terminal location and the amount of change.

With this configuration, terminal 100 estimates the second terminal location at the second time based on the amount of change in the location and the orientation of terminal 100 from the first time to the second time with reference to the first terminal location. Terminal 100 can thus reduce the processing load for estimating the second terminal location, which is the location of terminal 100 at the second time. In addition, terminal 100 estimates the second terminal location in accordance with the amount of change in the location from the first time to the second time with reference to the highly accurate first terminal location. Accordingly, terminal 100 can estimate the second terminal location with the minimum error.

In terminal 100 according to this embodiment, circuit 103 further obtains, together with the first terminal location and the three-dimensional model, the time information for specifying the first time. Circuit 103 then estimates the second terminal location based on the time information.

With this configuration, terminal 100 can easily specify the first time associated with the first terminal location and the three-dimensional model, using the time information. Accordingly, terminal 100 can easily estimate the amount of change in the location and the orientation of the terminal from the first time to the second time based on the second sensor information.

In terminal 100 according to this embodiment, the first sensor information includes a plurality of images captured at locations and orientations different from each other. Circuit 103 obtains an image included in the first sensor information obtained by the first sensor at the second time, and superimposes and displays the three-dimensional model on the image based on the second terminal location.

With this configuration, terminal 100 displays the three-dimensional model on the image captured at the second time from the second terminal location as the point of view. Terminal 100 can superimpose and display the three-dimensional model from the same point of view as that of when capturing the image. Accordingly, terminal 100 can display the three-dimensional model according to the second terminal location at the second time, that is, can display the three-dimensional model properly.

In terminal 100 according to this embodiment, the three-dimensional model superimposed on an image is displayed in a different manner from the image.

With this configuration, terminal 100 can display the image and the three-dimensional model distinguishably from each other. The user can thus easily check the status of generating three-dimensional model, by viewing the image and the three-dimensional model displayed on terminal 100.

Information processing device 200 according to this embodiment includes storage (memory) 202 and circuit 201 connected to storage 202. Circuit 201 obtains, from terminal 100, first sensor information obtained at a first time among items of first sensor information that are sequentially obtained by the first sensor included in terminal 100 and are for generating a three-dimensional model and estimating the location and the orientation of terminal 100. Circuit 201 estimates a first terminal location of terminal 100 at the first time based on the first sensor information obtained at the first time. Circuit 201 generates the three-dimensional model based on the first sensor information obtained at the first time. Circuit 201 transmits, to terminal 100, the first terminal location, the three-dimensional model, and the time information for specifying the first time.

With this configuration, information processing device 200 transmits, to terminal 100, time information for specifying the first time associated with the first terminal location and the three-dimensional model, together with the first terminal location and the three-dimensional model. Terminal 100 can easily specify the first time associated with the first terminal location and the three-dimensional model. Accordingly, terminal 100 can easily estimate, for example, the amount of change in the location and the orientation of terminal 100 from the first time to the second time based on second sensor information. That is, information processing device 200 allows terminal 100 to display the three-dimensional model according to the second terminal location at the second time, that is, to display the three-dimensional model properly.

### [Variations]

(1) In the embodiment described above, first sensor 101 included in terminal 100 is a camera. First sensor 101 is not limited thereto but may be a distance sensor. For example, the distance sensor measures the distance between the distance sensor and an object by emitting electromagnetic waves, receiving the electromagnetic waves reflected by the object, and measures the time from the emission of the electromagnetic waves to the arrival of the electromagnetic waves reflected by the object. Examples of the electromagnetic waves include sound waves, light, and radio waves. Examples of the distance sensor include a Light Detection and Ranging (LiDAR) sensor and a Time of Flight (ToF) sensor. In this case, information processing device 200 generates the three-dimensional model, using the distance information obtained by the distance sensor.
(2) In the embodiment described above, first sensor 101 included in terminal 100 may be a stereo camera. Information processing device 200 can thus generate the three-dimensional model at the first time using two images captured at the first time.
(3) In the embodiment described above, terminal 100 superimposes the three-dimensional model on the image obtained at the second time and causes display 104 to display the superimposed model. Terminal 100 however does not necessarily superimpose and display a three-dimensional model on an image. Terminal 100 may display the image obtained at the second time and the three-dimensional model on two independent areas of display 104 without superimposing the model on the image. Terminal 100 may cause display 104 to display only the three-dimensional model.
(4) In the embodiment described above, terminal 100 specifies the first time based on the time information. The specification is however not limited thereto. For example, if the communication speed of communication network 50 and the processing speeds of terminal 100 and information processing device 200 are stable and constant, the period from the first time to the second time is fixed. Terminal 100 may thus estimate the first time, by subtracting the fixed time from the second time. Accordingly, terminal 100 can specify the first time without obtaining the time information from information processing device 200.
(5) In the embodiment described above, information processing device 200 transmits the time information together with the first terminal location and the three-dimensional model to terminal 100. The transmission is however not limited thereto. There is no need to transmit the time information every time when transmitting the first terminal location and the three-dimensional model. For example, information processing device 200 may transmit the time information to terminal 100 once every predetermined times of transmitting the first terminal location and the three-dimensional model. At this time, information processing device 200 repeatedly transmits the first terminal location and the three-dimensional model to terminal 100 in the third period, for example. In the period from the transmission of the time information to terminal 100 to the next transmission of the time information to terminal 100, by integrating the third period with reference to the time information, terminal 100 can specify the time associated with the first terminal location and the three-dimensional model. In this manner, terminal 100 can specify the first time without always obtaining the time information together with the first terminal location and the three-dimensional model from information processing device 200.

### [Others]

In the embodiment described above, the elements may be achieved by dedicated hardware or by executing software programs suitable for the elements. Alternatively, the elements may be achieved by a program executor, such as a CPU or a processor, which reads out software programs stored in a recording medium, such as a hard disk or a semiconductor memory, and executes the read-out programs. Here, the software implementing the information processing device, and so on, according to the embodiment described above is a program for causing a computer to execute the steps included in the flowcharts shown in the drawings.

Note that the present disclosure includes the following cases.

(1) Specifically, the devices described above are each a computer system including a microprocessor, a read-only memory (ROM), a random-access memory (RAM), a display unit, a keyboard, a mouse, and other elements. The RAM or the hard disk unit stores computer programs. The microprocessor operates in accordance with the computer programs, thereby enabling each device to fulfil its function. The computer programs are each obtained by combining a plurality of command codes indicating instructions to the computer in order to fulfill the predetermined functions.
(2) A part or all of the elements of the devices described above may serve as a single system large-scale integrated (LSI) circuit. The system LSI circuit is a super multifunctional LSI circuit manufactured by integrating a plurality of components on one chip, and specifically is a computer system including a microprocessor, a ROM, a RAM, and other elements. The RAM stores computer programs. The microprocessor operates in accordance with the computer programs so that the system LSI circuit fulfills its functions.
(3) A part or all of the elements of the devices described above may be configured as an IC card which can be attached to and detached from each device or as a stand-alone module. The IC card or the module is a computer system including a microprocessor, a ROM, a RAM, and other elements. The IC card or the module may include a super-multifunctional LSI circuit. The microprocessor operates in accordance with the computer programs so that the IC card or the module fulfills its function. The IC card or the module may be tamper-resistant.
(4) The present disclosure may be implemented as the method described above. The present disclosure may also be directed to a computer program for executing the method described above using a computer, or may be a digital signal generated by the computer program.

The present disclosure may also be implemented as a computer-readable recording medium, such as a flexible disk, hard disk, CD-ROM, MO, DVD, DVD-ROM, DVD-RAM, Blu-ray (registered trademark) disc (BD), semiconductor memory, or any other suitable means, having recorded thereon the computer program or the digital signal. The present disclosure may include the digital signal recorded on the recording medium.

The present disclosure may be implemented by transmitting the computer program or the digital signal via, for example, an electric communication line, a wireless or wired communication line, a network such as the Internet, or data broadcasting.

The present disclosure may be directed to a computer system including a microprocessor and a memory. The memory stores computer programs. The microprocessor operates in accordance with the computer programs.

The program or the digital signal described above may be executed by another independent computer system, by being recorded in the recording medium and transferred, or being transferred via the network, for example.

(5) The embodiment and variations described above may be combined to each other.

### [Industrial Applicability]

The present disclosure is useful as a terminal, and so on, which can display a three-dimensional model properly.

### [Reference Signs List]

- 1: system
- 10: object
- 50: communication network
- 100: terminal
- 101: first sensor
- 102: second sensor
- 103: circuit
- 104: display
- 105: storage
- 111: communicator
- 112: estimator
- 113: display controller
- 200: information processing device
- 201: circuit
- 202: storage
- 211: communicator
- 212: estimator
- 213: generator

## Claims

1. A terminal comprising:
a first sensor that sequentially obtains first sensor information for generating a three-dimensional model and estimating a location and an orientation of the terminal;
a second sensor that sequentially obtains second sensor information for estimating an amount of change in the location and the orientation of the terminal; and
a circuit connected to the first sensor and the second sensor, wherein
the circuit:
transmits the first sensor information obtained by the first sensor at a first time to an information processing device;
obtains, from the information processing device, (i) a first terminal location of the terminal at the first time, estimated by the information processing device based on the first sensor information obtained at the first time, and (ii) a three-dimensional model generated by the information processing device based on the first sensor information obtained at the first time;
estimates a second terminal location of the terminal at a second time based on the first terminal location and the second sensor information, the second time being a time at which estimation of the second terminal location is executed; and
displays the three-dimensional model obtained, based on the second terminal location.

2. The terminal according to claim 1, wherein
the circuit estimates the first terminal location based on the second sensor information in addition to the first sensor information.

3. The terminal according to claim 1, wherein
an accuracy of the first terminal location is higher than an accuracy of the second terminal location.

4. The terminal according to claim 1, wherein
when estimating the second terminal location, the circuit:
estimates an amount of change in the location and the orientation of the terminal from the first time to the second time based on the second sensor information obtained from the first time to the second time; and
estimates the second terminal location based on the first terminal location and the amount of change.

5. The terminal according to any one of claims 1 to 4, wherein
the second sensor information includes an acceleration of the terminal and an angular velocity of the terminal.

6. The terminal according to any one of claims 1 to 4, wherein
the circuit further:
obtains, together with the first terminal location and the three-dimensional model, time information for specifying the first time; and
estimates the second terminal location based on the time information.

7. The terminal according to any one of claims 1 to 4, wherein
the first sensor information includes a plurality of images captured at locations and orientations different from each other, and
the circuit:
obtains an image included in the first sensor information obtained by the first sensor at the second time; and
superimposes and displays the three-dimensional model on the image based on the second terminal location.

8. The terminal according to claim 7, wherein
the three-dimensional model superimposed on the image is displayed in a different manner from the image.

9. An information processing device comprising:
a memory; and
a circuit connected to the memory, wherein
the circuit:
obtains, from a terminal, first sensor information obtained at a first time among items of first sensor information that are sequentially obtained by a first sensor included in the terminal and are for generating a three-dimensional model and estimating a location and an orientation of the terminal;
estimates a first terminal location of the terminal at the first time based on the first sensor information obtained at the first time;
generates the three-dimensional model based on the first sensor information obtained at the first time; and
transmits, to the terminal, the first terminal location, the three-dimensional model, and time information for identifying the first time.

10. A display method to be executed by a terminal, the display method comprising:
transmitting, to an information processing device, first sensor information obtained at a first time among items of first sensor information that are sequentially obtained by a first sensor included in the terminal and are for generating a three-dimensional model and estimating a location and an orientation of the terminal;
obtaining, from the information processing device, (i) a first terminal location of the terminal at the first time estimated by the information processing device based on the first sensor information obtained at the first time, and (ii) a three-dimensional model generated by the information processing device based on the first sensor information obtained at the first time;
estimating a second terminal location of the terminal at a second time based on the first terminal location and second sensor information that is sequentially obtained by a second sensor included in the terminal and is for estimating an amount of change in the location and the orientation of the terminal, the second time being the time at which estimation of the second terminal location is executed; and
displaying the three-dimensional model obtained, based on the second terminal location.

11. An information processing method to be executed by an information processing device, the information processing method comprising:
obtaining, from a terminal, first sensor information obtained at a first time among items of first sensor information that are sequentially obtained by a first sensor included in the terminal and are for generating a three-dimensional model and estimating a location and an orientation of the terminal;
estimating a first terminal location of the terminal at the first time based on the first sensor information obtained at the first time;
generating the three-dimensional model based on the first sensor information obtained at the first time; and
transmitting, to the terminal, the first terminal location, the three-dimensional model, and time information for identifying the first time.
